# FASCICULE DE BREVET EUROPEEN

(11) **EP 2 455 880 B1**
(45) Date de publication et mention de la délivrance du brevet: **08.01.2014**
(21) Numéro de dépôt: 11189804.5
(22) Date de dépôt: 18.11.2011
(51) Int. Cl.: G06F 21/00, H04L 12/28, H04N 7/16

(54) **Ensemble de diffusion par réseau IP de flux video numériques brouillés vers des terminaux IP directement reliés à ce réseau**
Sendeeinheit für IP-Netz mit verschlüsselten digitalen Videodatenströmen an direkt mit diesem Netz verbundene IP-Endgeräte
Assembly for broadcasting scrambled digital video streams via an IP network to IP terminals connected directly to said network

(30) Priorité: 18.11.2010 FR 1059464
(43) Date de publication de la demande: 23.05.2012
(73) Titulaire: FREEBOX, 75008 Paris (FR)
(72) Inventeur: Massiot, Christophe, 75014 Paris (FR)
(74) Mandataire: Dupuis-Latour, Dominique

(56) Documents cités:
- EP-A1- 1 632 848
- EP-A1- 2 146 285
- US-A1- 2003 005 435
- US-A1- 2004 168 063

## Description

L'invention concerne la diffusion des flux vidéo numériques par un réseau de type IP (*Internet Protocol*).

Elle concerne notamment la diffusion de flux vidéo tels que les programmes de télévision par une technologie de type xDSL (*Digital Subscriber Line,* ligne numérique d'abonné), principalement par une technologie ADSL (*Asymmetric DSL*) ou fibre optique (notamment l'offre FTTH *Fiber To The Home*), par un opérateur de télécommunication ou fournisseur d'accès Internet (FAI) (ci-après dénommés "opérateur") à un client connu de cet opérateur (ci-après désigné "abonné").

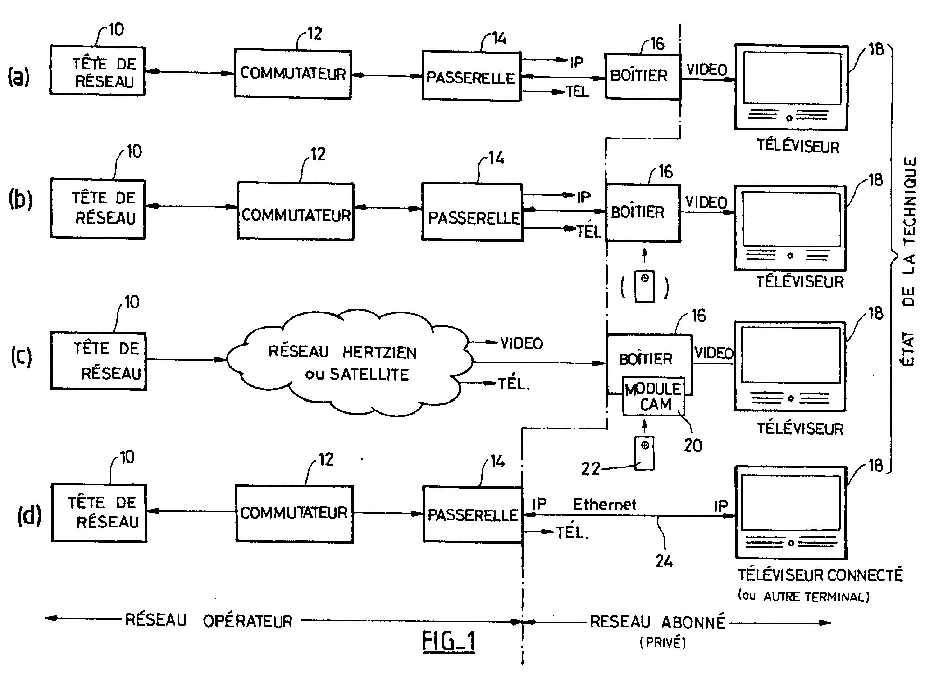

La configuration typique de base pour une telle diffusion de programmes de télévision est illustrée Figure 1 (a).

Dans cette configuration, la tête de réseau 10 de l'opérateur diffuse des programmes qui sont relayés vers les abonnés au moyen de commutateurs 12, par exemple un DSLAM (*Digital Subscriber Line Access Multiplexers,* multiplexeur d'accès à la ligne numérique de l'abonné), généralement installés au niveau des centraux répartiteurs de l'opérateur. Les commutateurs assurent l'interfaçage entre la tête de réseau 10 et la boucle locale à destination des divers abonnés. Chaque abonné dispose d'un équipement 14 de type "box" (boîtier), ci-après désigné "passerelle" (*gateway*), relié au commutateur par une liaison filaire ADSL ou par une liaison en fibre optique de type FTTH. Un exemple de tel boîtier 14 est l'équipement distribué sous la désignation *Freebox* par l'opérateur *Free,* Paris, France.

La passerelle 14 peut être un boîtier d'interfaçage multifonction, par exemple téléphone, réseau IP (par réseau filaire *Ethernet* ou sans fil *Wi-Fi*), télévision et mobile (par exemple à l'aide d'une technologie de type "femtocellule"). En ce qui concerne la télévision, la passerelle 14 est reliée par voie filaire ou sans fil à un boîtier 16 branché sur le téléviseur 18 de l'abonné, par exemple l'équipement distribué par l'opérateur Free sous la dénomination *Freebox HD.* Ce boîtier intègre décodeur, magnétoscope numérique à disque dur, serveur domestique, etc. Il assure notamment le décodage des différents signaux du flux video, qui pourront être visionnés sur le téléviseur 18. On désignera ci-après par "service" la diffusion de video, d'audio ou de métadonnées (sous-titres, données de programmes, applications interactives, etc.) à destination de l'abonné.

L'invention concerne plus précisément la sécurisation des flux de télévision numérique ainsi diffusés par l'opérateur.

Cette sécurisation met en général en oeuvre un mécanisme de protection à deux niveaux de cryptographie, correspondant à deux buts bien distincts (bien que souvent résolus par le même biais technique) :
- contrôle d'accès : il s'agit d'empêcher un non-abonné d'accéder au service ;
- protection numérique : il s'agit d'empêcher un abonné d'enregistrer le service sous une forme qui permettrait une redistribution ou une conservation non contrôlée.

Les composantes audio et vidéo du service à diffuser font l'objet au préalable d'une compression par un encodeur, au moyen de procédés tels que ceux prescrits en particulier par les normes ISO/IEC 13818-2 et 3 (dites MPEG-2).

Après compression, les différentes composantes encodées forment des flux élémentaires continus appelés ES (*Elementary Stream,* flux élémentaire). Les flux ES sont ensuite découpés en paquets de taille variable ou PES (*Packetized Elementary Stream,* flux élémentaire en paquets), qui sont ensuite eux-mêmes découpés en paquets de taille fixe TS (*Transport Stream,* flux de transport). Chaque paquet TS est un paquet de 188 octets comprenant un en-tête d'au moins 4 octets, comprenant différents indicateurs qualifiant le contenu du paquet, ainsi qu'un numéro codé sur 13 bits (de 0000 à 8191) appelé PID (*Packet IDentifier,* identifiant de paquet), caractérisant l'appartenance des données du paquet.

Les paquets TS provenant des différents flux élémentaires sont ensuite multiplexés pour former un train de données binaires final, qui sera émis sur des supports de transmission tels que satellite, câble, diffusion hertzienne terrestre ou réseau IP, notamment diffusion xDSL, fibre optique ou mobile (par exemple à l'aide d'une technologie de type femtocellule).

Ce découpage en paquets et la distribution des flux vidéo numériques sont définis par la norme ISO/IEC 13818-1 (dite MPEG-2 système), et plus particulièrement sous la sous-partie dénommée "flux de transport". La norme peut être éventuellement étendue ou précisée par des normes régionales, notamment la norme européenne DVB ou la norme américaine ATSC.

Pour assurer la sécurisation des flux évoquée plus haut, les contenus (*payload,* charge utile) des paquets élémentaires TS composant un même service sont embrouillés selon un algorithme commun, tenu secret, appelé "DVB-CSA", proche de l'algorithme public DES. D'autres algorithmes peuvent être utilisés, tels que AES ou DVB-CSA3. Ces algorithmes utilisent tous une clé symétrique, c'est-à-dire que la clé pour embrouiller et désembrouiller le flux est la même. Cette clé est appelée "mot de contrôle" ou *Control Word* (CW) et sa taille est fixe, 64 bits pour DVB-CSA.

Ce type d'algorithme résiste mal aux attaques en force brute, et pourrait être piraté en quelques jours ou quelques semaines de calcul sur des ordinateurs du commerce. Cela n'a toutefois aucune importance, car la clé DVB-CSA (le "mot de contrôle" CW) change régulièrement, de façon aléatoire, au bout d'une durée appelée "crypto-période", généralement de l'ordre de 10 secondes. De ce fait, pour pirater un programme d'une heure et demie, il faudrait réussir à retrouver environ 500 clés DVB-CSA, ce qui est très difficile avec la technologie actuelle, et surtout impossible à exploiter pour un piratage de masse.

Pour permettre le désembrouillage côté abonné, il est toutefois nécessaire de disposer d'un moyen - lui-même sécurisé - de faire parvenir les différentes clés de cryptage au récepteur de l'abonné légitime, qui n'a aucun moyen de les connaître *a priori* car elles ont été générées aléatoirement au niveau de la tête de réseau.

C'est ici qu'intervient un deuxième niveau de cryptographie, par embrouillage de ces clés de cryptage (mots de contrôle CW) au moyen d'un algorithme plus solide et plus coûteux en ressources. Les clés ainsi embrouillées sont placées dans des paquets élémentaires TS spécifiques, appelés ECMs (*Entitlement Control Messages,* messages de contrôle d'habilitation), et ces paquets sont multiplexés à l'intérieur du flux de transport avec les autres données du programme.

On comprendra que toute la sécurité du système repose sur l'algorithme utilisé pour créer les ECMs, puis les décoder sur le récepteur final.

Cette partie n'est pas normalisée et est maintenue confidentielle par les différents opérateurs et éditeurs de solutions de cryptage. Les algorithmes utilisés présentent en général les caractéristiques suivantes :
- l'algorithme proprement dit n'est pas exécuté dans le boîtier décodeur 16 de l'abonné, mais dans une carte à puce, unique pour chaque client, dont il est extrêmement difficile d'extraire le code ;
- cet algorithme ne peut pas être piraté par force brute, car son calcul très gourmand en ressources prendrait des siècles ou des millénaires ;
- la carte à puce dispose d'une notion de "droits" ou "classes", qui lui permet de décider de désembrouiller ou non les mots de contrôle qui lui sont envoyés en fonction des "droits" dont dispose l'abonné ;
- ces "droits" sont véhiculés dans le flux de transport dans des paquets appelés EMMs (*Entitlement Management Messages,* messages de gestion de l'habilitation), similaires aux ECMs ;
- le boîtier décodeur de l'abonné écrit les ECMs et les EMMs dans la carte à puce et en lit en retour les mots de contrôle désembrouillés.

Une configuration correspondante de mise en oeuvre est illustrée notamment Figure 1(c).

Dans cette configuration typique, le boîtier décodeur 16 de l'abonné est pourvu d'un module spécifique 20 recevant une carte à puce 22 pour permettre l'implémentation de ces fonctions.

Le module 20 peut être notamment un module normalisé appelé CAM (*Conditional Access Module*) mettant en oeuvre une interface appelée Cl (*Conditional Interface*) conforme aux spécifications ETSI EN 50221.

Le module CAM 20, inséré dans un terminal 16 de type quelconque, reçoit l'intégralité du flux de transport TS, décide lui-même quels ECMs/EMMs envoyer à la carte à puce 22 qui est insérée dans le module 20, et désembrouille le ou les services sélectionnés du flux de transport. Le terminal 16 proprement dit n'a aucune action à effectuer pour déprotéger le service, cette fonction étant opérée en interne par le module CAM 20 et la carte à puce 22. Il suffit donc à l'abonné de disposer d'un terminal compatible CI et d'un module CAM correspondant à l'algorithme de contrôle d'accès utilisé par l'opérateur diffusant le programme.

Toutes ces techniques, utilisées en diffusion numérique classique, peuvent être reprises à divers degrés par les opérateurs de télévision sur IP, (IPTV) par exemple les opérateurs xDSL.

Ces opérateurs IPTV peuvent être classés en deux catégories :
- la *première catégorie* est celle des opérateurs qui considèrent leur réseau comme un réseau classique de diffusion et distribuent à leurs abonnés des terminaux de type *set-top box* équipés d'un système de contrôle d'accès traditionnel avec éventuellement une carte à puce. Le contrôle d'accès est assuré par le terminal et sa carte à puce : en d'autres termes, le terminal reçoit tous les flux, mais sous forme cryptée, et le décryptage n'est assuré que si l'abonné dispose des moyens appropriés et des droits permettant de déclencher le désembrouillage. Cette configuration correspond à celle illustrée Figure 1 (b); et
- la *seconde catégorie* est celle des opérateurs qui tirent parti du fait que le réseau IP est un réseau connecté, et que chaque boîtier, constituant le point de terminaison du réseau de l'opérateur, peut être identifié de manière unique et fiable par les équipements de l'opérateur situés en amont.
L'invention se place dans ce second cas de figure.

Ce schéma nécessite de disposer d'un équipement spécifique chez l'abonné permettant d'identifier l'abonné de façon sûre (par son adresse IP), cet équipement spécifique remplaçant le terminal banalisé avec module CAM et carte à puce utilisé par l'autre catégorie d'opérateurs.

En effet, si l'on peut identifier de manière unique et fiable l'équipement (spécifique) chez l'abonné et donc l'abonné lui-même, le meilleur contrôle d'accès consiste alors non pas à lui envoyer un flux embrouillé qu'il a la capacité de désembrouiller ou non (comme avec la première catégorie d'opérateurs), mais à ne rien lui envoyer du tout dès lors (i) qu'il n'est pas identifié ou (ii) qu'il s'agit d'un service auquel il n'a pas accès.

Cette méthode revient, de manière générale, à déporter la fonctionnalité d'accès conditionnel plus en amont dans le réseau - typiquement au niveau du commutateur de l'opérateur (en technologie xDSL ou fibre optique) ou du routeur Ethernet (en télévision IP). Elle permet d'éviter tout piratage de masse, car les flux protégés ne sont pas du tout mis à disposition, sous quelque forme que ce soit, des clients qui n'y sont pas abonnés. Des protocoles standard existent pour diffuser les droits vers les équipements en réseau, chargés de gérer le contrôle d'accès par des messages comparables aux EMMs, mais distribués hors du flux de transport et présentant une syntaxe différente. On pourra notamment se référer au FR 2 940 870 A1 (Free) qui décrit une technologie de type ARDP (*Access Right Distribution Protocol*) pour la diffusion de tels droits.

Une technique particulière est exposée par le US2003/0005435 A1, qui propose, au lieu de multiplexer les ECMs dans le flux de données, de les envoyer sur un canal séparé, sécurisé, par exemple via un réseau virtuel privé (VPN), une liaison de téléphonie mobile, ou encore une liaison IP distincte de la liaison servant à acheminer le flux video. L'inconvénient de cette solution est bien évidemment de nécessiter deux liaisons différentes de transmission de données là où l'on n'en utilise habituellement qu'une seule.

Une autre technique encore est exposée par le EP 2 146 285 A1, qui repose sur la personnalisation des flux transmis aux différents abonnés (diffusion unicast), avec contrôle sélectif, au niveau des serveurs, de la distribution des flux à ces derniers. Le recours à un nombre important d'équipements côté opérateurs limite fortement une mise en oeuvre à grande échelle de cette solution complexe.

Quelle que soit la solution retenue, il reste toutefois nécessaire de répondre au deuxième impératif exposé en préambule, à savoir la protection numérique du service.

C'est pour cette raison qu'un algorithme d'embrouillage est souvent utilisé, en conjonction avec la méthode précédente. Cet algorithme peut être beaucoup plus simple, car il n'a pas à vérifier les droits de l'abonné (cela est fait en amont). Seuls les ECMs sont nécessaires, et ils sont désembrouillés par un algorithme propriétaire, connu du terminal fourni par l'opérateur, pour que ce terminal puisse récupérer les mots de contrôle permettant de décoder le service.

Comme on l'a indiqué, la sécurité repose sur le fait que le terminal est un équipement spécifique distribué à l'abonné par l'opérateur.

De ce fait, ces techniques ne sont pas transposables au cas d'une diffusion IP effectuée directement sur des équipements de type "téléviseur connecté" (dit encore "téléviseur IP" ou "Internet TV") ou autre terminal comparable, n'appartenant pas à l'opérateur. Il en serait de même avec tout équipement fonctionnant de manière analogue, par exemple un ordinateur équipé des logiciels de décodage appropriés, ou un terminal mobile de type tablette ou téléphone portable.

Un tel équipement, ci-après désigné "terminal", dispose d'une interface IP qui permet de le connecter directement au réseau IP de l'abonné (réseau filaire Ethernet, réseau sans fil Wi-Fi, etc.) sans interposition d'un boîtier décodeur de type *set-top box* entre le terminal et le réseau.

Cette configuration est illustrée Figure 1(d), où l'on voit qu'entre la passerelle 14 et le téléviseur connecté 18 il n'est prévu aucun boîtier ou élément intermédiaire, la passerelle et le téléviseur étant directement reliés par la liaison IP 24.

Le problème technique de l'invention est d'assurer, dans le cas d'une diffusion IP effectuée directement sur de tels équipements IP banalisés n'appartenant pas à l'opérateur, une sécurisation du flux IP avec un même niveau de protection que les techniques que l'on vient d'exposer.

On notera que, dans une telle configuration, les interfaces normalisées de type CI ou CI+ (qui prévoit une couche supplémentaire d'authentification entre le module et le terminal) ne sont pas utilisables. En effet, en télévision IP, la notion de module CAM n'existe pas, pour des raisons techniques, les normes CI et CI+ ayant été définies pour être intégrées dans l'architecture d'un décodeur traditionnel. L'interface CI/CI+ s'y intercale dans un bus de transport allant du démodulateur au décodeur : lorsqu'un module CAM est inséré, le bus de transport est détourné, entre dans le module CAM et en ressort, avec un flux désembrouillé.

Or en télévision IP l'interface Ethernet (ou autre) utilisée est directement raccordée au décodeur, et ne passe pas par le bus de transport. Il n'existe de ce fait aucun moyen d'injecter les services de télévision IP dans un module CAM.

Quand bien même on souhaiterait modifier les récepteurs pour autoriser un tel usage (par exemple en intégrant une sortie du bus de transport dans le décodeur, reliée à l'entrée de l'interface CI), cela serait difficile car :
- les modules CAM sont prévus pour travailler sur des multiplexes comportant plusieurs services, à débit fixe, ce qui n'est pas nécessairement le cas en télévision IP, et il est difficile de prévoir comment ils réagiraient dans une telle utilisation ;
- enfin, les algorithmes de désembrouillage des ECMs utilisés en télévision IP sont souvent spécifiques à l'opérateur, et il n'existe pas de module CAM associé ; le coût du développement d'un tel module serait donc à ajouter.

Jusqu'à présent, cela ne pose de problème particulier, car les opérateurs de télévision IP distribuent à leurs clients un boîtier décodeur spécifique, compatible avec les techniques qui leur sont propres de contrôle d'accès et d'embrouillage des ECMs.

En revanche, dans les prochaines années, les téléviseurs seront de plus en plus équipés d'un port Ethernet permettant de les relier directement au réseau de l'opérateur (interface IP), et le besoin va se présenter de permettre à ces téléviseurs de décoder eux-mêmes les services de l'opérateur, ce qui sera plus ergonomique (une seule télécommande, une seule interface) et plus économique (plus de boîtier entre la passerelle et le téléviseur). On peut également envisager que les opérateurs souhaitent autoriser des clients logiciels sur ordinateurs personnels ou terminaux mobiles, pour les mêmes raisons.

Dans le cas d'un opérateur utilisant une solution de contrôle d'accès en amont du terminal (la "seconde catégorie" d'opérateurs évoquée plus haut), le flux est diffusé en clair et peut être décodé par un téléviseur ou un logiciel sans précautions particulières. Toutefois, dès lors qu'une protection numérique est appliquée - ce qui est le cas général - ou que le contrôle d'accès repose sur un embrouillage, un matériel standard (le téléviseur connecté) ne disposera d'aucun moyen de désembrouiller le flux reçu (on a expliqué plus haut que les interfaces Cl ou CI+ sont ici inopérantes).

L'invention propose essentiellement, pour résoudre ce problème, de tirer parti du caractère connecté de la diffusion sur IP en (i) mettant en oeuvre un serveur de décodage des ECMs, contrôlé par l'opérateur, auquel le terminal devra recourir et (ii) en prévoyant dans le terminal un logiciel supplémentaire pour gérer les accès à ce serveur de décodage.

Le serveur de décodage des ECMs sera appelé ci-après "ECMD", par analogie avec l'étage ECMG (générateur d'ECMs), utilisé dans la tête de réseau de l'opérateur pour générer les ECMs.

L'ECMD pourra être placé sur un serveur physique dans une salle technique de l'opérateur, reliée à l'abonné par un moyen sûr et fiable, ou sur tout autre équipement maîtrisé par l'opérateur : commutateur, routeur IP, ou même sur la passerelle fournie à l'abonné par l'opérateur, et qui constitue le point de terminaison du réseau de l'opérateur.

Le logiciel supplémentaire à prévoir dans le terminal permettra à ce dernier, sous certaines conditions : (i) de se connecter à un ECMD, (ii) de lui envoyer les ECMs embrouillés et (iii) d'en récupérer, de manière sécurisée, les mots de contrôle CW permettant d'accéder au service.

Plus précisément, l'invention vise un ensemble du type général divulgué par le US2003/0005435 A1 précité, c'est-à-dire comprenant les éléments énoncés dans le préambule de la revendication 1.

La présente invention est remarquable en ce qu'elle comprend, pour atteindre les buts indiqués plus haut, les éléments énoncés dans la partie caractérisante de la revendication 1.

Les sous-revendications visent diverses formes de mise en oeuvre particulières, avantageuses.

On va maintenant décrire un exemple de mise en oeuvre du dispositif de l'invention, en référence aux dessins annexés où les mêmes références numériques désignent d'une figure à l'autre des éléments identiques ou fonctionnellement semblables.
Les Figures 1(a) à 1(d), précitées, montrent différentes configurations de réseau opérateur/abonné, avec les éléments permettant d'assurer la sécurisation de la diffusion des flux vers l'abonné.
La Figure 2 illustre de façon schématique les différents éléments mis en oeuvre par la configuration de diffusion selon l'invention.

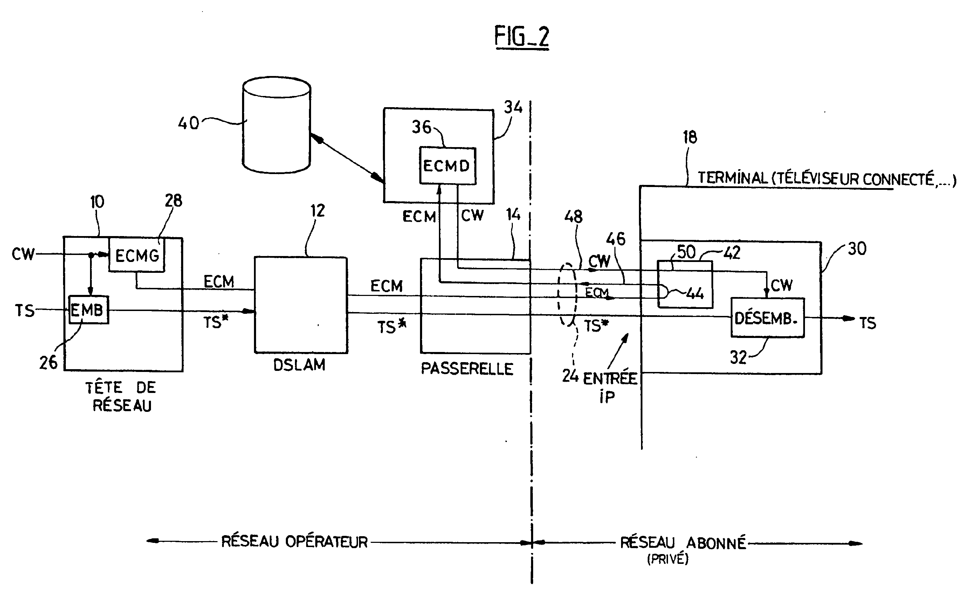

Sur la Figure 2, qui illustre les principaux éléments mis en oeuvre par l'invention pour assurer la sécurisation de la diffusion des flux vers l'abonné, on retrouve les principaux éléments illustrés à la Figure 1 (d) décrite en introduction, à savoir :
- du côté du réseau opérateur : la tête de réseau 10, le commutateur 12 et la passerelle 14 (installée chez l'abonné mais qui appartient au réseau de l'opérateur), et
- du côté du réseau de l'abonné : le terminal 18, par exemple de type "téléviseur connecté" ou "IPTV", et la liaison IP 24 reliant directement ce terminal 18 à la passerelle 14 - donc sans interposition d'aucun boîtier ou terminal intercalaire pour le décodage et la sécurisation des flux, à la différence des configurations de l'état de la technique illustrées notamment Figures 1 (a) à (c).

La tête de réseau 10 comporte un étage 26 assurant l'embrouillage du flux de transport TS, cet embrouillage étant mis en oeuvre par un algorithme utilisant des mots de contrôle CW modifiés à intervalles réguliers. La tête de réseau comporte également un générateur d'ECMs 28 produisant à partir des mots de contrôle CW des messages embrouillés de type ECM sous forme de paquets envoyés concurremment avec le flux de transport TS embrouillé (noté TS*), pour permettre le désembrouillage ultérieur de celui-ci.

Ces techniques sont en elles-mêmes bien connues et ne seront pas décrites plus en détail ; elles ne sont pas modifiées pour la mise en oeuvre de l'invention.

Le flux embrouillé TS* et les ECMs sont transmis via la passerelle 14 à l'interface IP 30 du terminal 18, qui les reçoit donc tels quels, en entrée. L'interface 30 comporte un étage de désembrouillage 32 du flux embrouillé TS*, permettant d'obtenir le flux en clair TS.

Le problème consiste à obtenir le mot de contrôle CW nécessaire à ce désembrouillage, à partir des ECMs reçus en entrée.

Ce décodage va être opéré par un serveur de décodage 34 comprenant un module de décodage des ECMs 36, propre à générer les mots de contrôle CW à partir des ECMs envoyés par le terminal 18.

Le serveur 34 peut être par ailleurs associé à une base de données 40 répertoriant les droits des différents utilisateurs.

La nécessité de recourir à un serveur ECMD et la disponibilité de ce serveur peuvent être indiquées par exemple en positionnant un descripteur (un drapeau) en un emplacement approprié de la table CAT (*Conditional Access Table*), qui est une table de correspondance, elle-même encapsulée dans un paquet élémentaire TS, définie dans ISO/IEC 13818-1 et destinée à gérer les droits d'accès. Ce descripteur indiquera non seulement la disponibilité du serveur ECMD, mais également une ou plusieurs adresses IP et ports associés.

Pour établir la connexion avec le serveur ECMD, le terminal comporte un étage 42 (en pratique, un logiciel additionnel incorporé à l'interface IP 30) permettant d'ouvrir une connexion TCP/IP avec le serveur 34. Le terminal 18 et le serveur 34 mettent en oeuvre un processus classique de "poignée de main" (*handshake*), par exemple selon l'algorithme de Diffie-Hellman : le terminal 18 et le serveur 34 génèrent chacun aléatoirement une clé asymétrique (composée d'une partie publique et d'une partie privée), chacun envoyant à l'autre sa partie publique. À l'aide de sa propre partie privée et de la partie publique de l'autre, chacun des deux est capable de calculer un secret partagé qui n'est connu que d'eux seuls. Ce secret sera utilisé comme clé d'embrouillage pour sécuriser la liaison entre le terminal et le serveur ECMD, au moyen d'un algorithme d'embrouillage symétrique plus classique tel que AES. Comme à aucun moment ce secret n'aura transité dans le réseau, un tiers ne sera pas capable d'en prendre connaissance.

Une fois la connexion ouverte, sécurisée et authentifiée, le terminal 18 envoie au serveur ECMD 34 les ECMs issus du flux reçu en entrée (comme schématisé par les flèches 44 et 46), afin que le serveur ECMD envoie en retour les mots de contrôle CW nécessaires au désembrouillage (flèches 48, 50).

Dans le cas des opérateurs de la "première catégorie" évoquée plus haut, c'est-à-dire où le contrôle d'accès repose sur l'embrouillage du flux, le serveur ECMD vérifie l'identité du client via son adresse IP (on suppose être sur le réseau interne de l'opérateur, où les adresses IP sont un paramètre fiable et sûr), obtient ses droits par exemple en interrogeant la base de données 40, et peut refuser de désembrouiller l'ECM si certaines conditions ne sont pas réunies (durée d'abonnement, etc.). On soulignera l'importance dans ce cas de l'étape décrite plus haut d'authentification du terminal.

Dans le cas d'un opérateur de la "seconde catégorie" évoquée plus haut, c'est-à-dire où chaque boîtier peut être identifié de manière unique et fiable par les équipements en amont, l'ECMD peut renvoyer directement les mots de contrôle CW désembrouillés.

De préférence, lorsque l'utilisateur change de chaîne, le terminal maintient ouverte la connexion au serveur ECMD 34 pendant un certain délai (au moins tant que l'adresse IP ne change pas). L'établissement de la communication terminal 18 et serveur 34 est en effet un processus qui peut s'avérer relativement long (typiquement de l'ordre de 1 à 2 secondes), et l'on peut souhaiter faire l'économie des échanges protocolaires de sécurisation et d'authentification à chaque changement de chaîne.

Diverses variantes et perfectionnements de mise en oeuvre sont envisageables.

Ainsi, le serveur 34 et le terminal 18 peuvent embarquer des certificats d'authentification, fonctionnant selon le principe d'une interface à clé publique PKI (*Public Key Interface*), ces certificats étant signés par une autorité de certification indépendante, ce qui permet de vérifier l'authenticité respective du terminal et du serveur ECMD. Ceci évite :
- de distribuer les mots de contrôle à un terminal non autorisé, potentiellement modifié par des pirates pour contourner les mécanismes de protection numérique ;
- de laisser des tiers créer des serveurs ECMD pirates, partageant à plusieurs utilisateurs des mots de contrôle destinés à un seul (procédé dit du *card-sharing,* décrit par exemple dans le CN 101198014 A) et de monter ainsi de véritables réseaux de piratage utilisant des terminaux tout à fait standard et non modifiés.

La vérification du certificat se fait généralement par un défi ou challenge, où une partie envoie un texte aléatoire à l'autre, qui le signe avec son certificat et le renvoie ; la partie vérifie alors que la signature correspond bien à un certificat autorisé.

La mise en oeuvre de cette protection peut être extrêmement complexe, et comporter des listes de révocation dans le cas où certains terminaux seraient piratés, et leurs certificats utilisés à des fins malhonnêtes. Des techniques en elles-mêmes connues peuvent être utilisées à cet effet, telles que celles mises en oeuvre pour la protection des disques *Blu-ray,* ou le système TLS (*Transport Layer Security*) utilisé sur le web.

Dans un autre ordre d'idées, le protocole entre le terminal 18 et le serveur ECMD 34 peut comprendre des métadonnées pour gérer des fonctionnalités supplémentaires, par exemple, un processus de double cryptage avec contrôle parental, technique souvent implémentée via les ECMs (l'ECM contient un drapeau indiquant au terminal décodeur qu'il doit demander la désactivation du contrôle parental).

Dans ce cas, le serveur ECMD refusera de désembrouiller les mots de contrôle, en signalant au terminal que la saisie du code parental est obligatoire, et attendra que le terminal réponde en envoyant le code saisi. En variante, le serveur ECMD pourra désembrouiller les mots de contrôle de façon inconditionnelle, mais en les accompagnant d'une signalisation de catégorie de programme, en laissant au terminal la responsabilité de gérer le déverrouillage par le code parental.

## Revendications

1. Un ensemble de diffusion d'un flux video numérique par un réseau, dans lequel le réseau comprend :
- une partie de réseau d'opérateur comprenant :
• des moyens pour générer des successions de mots de contrôle CWs formant clés d'embrouillage/désembrouillage ;
• des moyens pour produire un flux video ;
• des moyens (26) pour embrouiller le flux video par un premier algorithme à partir des CWs successivement générés, et produire ainsi un flux video embrouillé ;
• des moyens (28) pour embrouiller les CWs par un second algorithme, et produire ainsi des messages de contrôle d'habilitation ECMs dérivés de ces CWs ;
• des moyens pour produire un flux de transport contenant des paquets avec le flux video embrouillé et des paquets avec les ECMs ;
• une liaison de transmission du flux de transport vers le réseau d'abonné ; et
• une passerelle (14) formant point de terminaison du réseau d'opérateur, recevant le flux de transport,
- une partie de réseau privé d'abonné comprenant :
• un terminal (18) comportant une interface (30), apte à recevoir en entrée le flux de transport contenant les paquets avec le flux video embrouillé, et des moyens de désembrouillage de ce flux video au moyen de CWs associés ; et
• une liaison entre le terminal et une sortie de la passerelle.
**caractérisé en ce que** le réseau est un réseau de type iP, et :
- l'interface (30) du terminal est une interface IP, et la liaison (24) entre le terminal (18s) et la sortie de la passerelle (14) est une liaison IP ;
- le terminal (18) du réseau privé d'abonné est identifiable par le réseau d'opérateur de manière unique, par son adresse IP ;
- le réseau privé d'abonné est dépourvu de module de gestion d'accès conditionnel (CAM) à carte à puce ;
- l'ensemble comprend en outre un serveur de décodage des ECMs (34), comportant une interface IP et des moyens (36) pour recevoir et décoder des ECMs de manière à délivrer en sortie des CWs correspondants ;
- ce serveur de décodage des ECMs fait partie du réseau d'opérateur ;
- le terminal comprend en outre :
• des moyens (42) pour établir une connexion avec le serveur de décodage des ECMs via : i) l'interface IP (30) du réseau d'abonné et ii) la passerelle (14) du réseau d'opérateur ;
• des moyens pour envoyer au serveur de décodage les ECMs du flux de transport reçu en entrée du terminal ; et
• des moyens pour recevoir en retour les CWs correspondants délivrés par le serveur de décodage des ECMs ; et
- il est en outre prévu des moyens cryptographiques de sécurisation du protocole d'échange de données entre le terminal et le serveur de décodage des ECMs.

2. L'ensemble de diffusion de la revendication 1, comprenant en outre des moyens d'authentification du terminal à l'établissement de la connexion avec le serveur de décodage des ECMs.

3. L'ensemble de diffusion de la revendication 1, comprenant en outre des moyens d'authentification du serveur de décodage des ECMs à l'établissement de la connexion avec le terminal.

4. L'ensemble de diffusion de la revendication 1, dans lequel les moyens du terminal pour envoyer les ECMs au serveur de décodage des ECMs et recevoir en retour les CWs correspondants sont des moyens aptes à opérer via ladite liaison IP entre le terminal et l'interface réseau de l'opérateur.

5. L'ensemble de diffusion de la revendication 1, dans lequel le serveur de décodage des ECMs est installé dans un local contrôlé par l'opérateur.

6. L'ensemble de diffusion de la revendication 1, dans lequel le serveur de décodage des ECMs est installé dans la passerelle.

7. L'ensemble de diffusion de la revendication 1, dans lequel le réseau d'opérateur comprend en outre des moyens pour générer des paquets contenant un indicateur spécifique de disponibilité d'un serveur de décodage des ECMs.

8. L'ensemble de diffusion de la revendication 1, dans lequel :
- l'ensemble comprend en outre une base de données (40) de droits d'accès propres à chaque abonné, comprenant un identifiant IP de l'abonné et un ensemble de critères définissant les droits d'accès, et
- le serveur de décodage des ECMs comprend des moyens pour :
• contrôler l'adresse IP du terminal à l'établissement de la connexion,
• examiner si lesdits critères sont ou non vérifiés, et
• conditionner le décodage des ECMs à la vérification desdits critères.

9. L'ensemble de diffusion de la revendication 1, dans lequel :
- les moyens du réseau d'opérateur pour embrouiller le flux video sont des moyens à double embrouillage ;
- le terminal comprend des moyens pour composer un code de déverrouillage et envoyer ce code au serveur de décodage des ECMs ; et
- le serveur de décodage des ECMs comprend des moyens pour conditionner la délivrance en sortie des CWs à la réception préalable d'un code de déverrouillage conforme envoyé par le terminal.

10. L'ensemble de diffusion de la revendication 1, dans lequel :
- les moyens du réseau d'opérateur pour embrouiller le flux video sont des moyens à double embrouillage ;
- le serveur de décodage des ECMs comprend des moyens pour délivrer en sortie au terminal, outre les CWs, un indicateur spécifique de catégorie de programme soumis à double embrouillage ; et
- le terminal comprend des moyens pour composer un code de déverrouillage et conditionner la mise en oeuvre des moyens de désembrouillage du flux video à la composition préalable d'un code de déverrouillage conforme.

11. L'ensemble de diffusion de la revendication 1, dans lequel les moyens du terminal pour établir une connexion avec le serveur de décodage des ECMs sont aptes à maintenir la connexion établie même en cas d'un changement de chaîne commandé depuis le terminal.

12. L'ensemble de diffusion de la revendication 1, dans lequel le réseau d'opérateur comprend en outre des moyens pour générer, outre les messages de contrôle d'habilitation ECMs pour le désembrouillage du flux video, des messages de gestion d'habilitation EMMs pour la gestion des droits d'accès propres à l'abonné.

## Patentansprüche

1. Einheit zum Senden eines digitalen Videostroms über ein Netz, wobei das Netz enthält:
- einen Betreibernetzabschnitt, der enthält:
• Einrichtungen, um Folgen von Kontrollwörtern CWs zu generieren, die Verwürfelungs-/Entwürfelungsschlüssel formen;
• Einrichtungen, um einen Videostrom zu erzeugen;
• Einrichtungen (26), um den Videostrom durch einen ersten Algorithmus ausgehend von den nacheinander generierten CWs zu verwürfeln, und so einen verwürfelten Videostrom zu erzeugen;
• Einrichtungen (28), um die CWs durch einen zweiten Algorithmus zu verwürfeln, und so von diesen CWs abgeleitete Berechtigungskontrollmitteilungen ECMs zu erzeugen;
• Einrichtungen, um einen Pakete mit dem verwürfelten Videostrom und Pakete mit den ECMs enthaltenden Transportstrom zu erzeugen;
• eine Verbindung zur Übertragung des Transportstroms zum Teilnehmernetz; und
• ein einen Endpunkt des Betreibernetzes formendes Gateway (14), das den Transportstrom empfängt,
- einen privaten Teilnehmernetzabschnitt, der enthält:
• ein Endgerät (18), das eine Schnittstelle (30), die am Eingang den die Pakete mit dem verwürfelten Videostrom enthaltenden Transportstrom empfangen kann, und Einrichtungen zum Entwürfeln dieses Videostroms mittels zugeordneter CWs aufweist; und
• eine Verbindung zwischen dem Endgerät und einem Ausgang des Gateways,
**dadurch gekennzeichnet, dass** das Netz ein Netz der Art IP ist, und:
- die Schnittstelle (30) des Endgeräts eine IP-Schnittstelle ist, und die Verbindung (24) zwischen dem Endgerät (18) und dem Ausgang des Gateways (14) eine IP-Verbindung ist;
- das Endgerät (18) des privaten Teilnehmernetzes vom Betreibernetz einzig durch seine IP-Adresse erkennbar ist;
- das private Teilnehmernetz kein bedingtes Zugriffsverwaltungsmodul (CAM) mit Chipkarte aufweist;
- die Einheit außerdem einen Server zur Decodierung der ECMs (34) enthält, der eine IP-Schnittstelle und Einrichtungen (36) für den Empfang und die Decodierung der ECMs aufweist, um am Ausgang entsprechende CWs zu liefern;
- dieser Server zur Decodierung der ECMs Teil des Betreibernetzes ist;
- das Endgerät außerdem enthält:
• Einrichtungen (42) zum Aufbau einer Verbindung mit dem Server zur Decodierung der ECMs über: i) die IP-Schnittstelle (30) des Teilnehmernetzes und ii) das Gateway (14) des Betreibernetzes;
• Einrichtungen zum Schicken des am Eingang des Endgeräts empfangenen Transportstroms an den Server zur Decodierung der ECMs; und
• Einrichtungen, um im Gegenzug die entsprechenden CWs zu empfangen, die vom Server zur Decodierung der ECMs geliefert werden; und
- außerdem kryptographische Einrichtungen zur Sicherung des Datenaustauschprotokolls zwischen dem Endgerät und dem Server zur Decodierung der ECMs vorgesehen sind.

2. Sendeeinheit nach Anspruch 1, die außerdem Einrichtungen zur Authentifizierung des Endgeräts beim Aufbau der Verbindung mit dem Server zur Decodierung der ECMs enthält.

3. Sendeeinheit nach Anspruch 1, die außerdem Einrichtungen zur Authentifizierung des Servers zur Decodierung der ECMs beim Aufbau der Verbindung mit dem Endgerät enthält.

4. Sendeeinheit nach Anspruch 1, wobei die Einrichtungen des Endgeräts, um die ECMs an den Server zur Decodierung der ECMs zu schicken und im Gegenzug die entsprechenden CWs zu empfangen, Einrichtungen sind, die über die IP-Verbindung zwischen dem Endgerät und der Netzschnittstelle des Betreibers wirken können.

5. Sendeeinheit nach Anspruch 1, wobei der Server zur Decodierung der ECMs in einem vom Betreiber kontrollierten Raum angeordnet ist.

6. Sendeeinheit nach Anspruch 1, wobei der Server zur Decodierung der ECMs im Gateway angeordnet ist.

7. Sendeeinheit nach Anspruch 1, wobei das Betreibernetz außerdem Einrichtungen enthält, um Pakete zu generieren, die einen spezifischen Verfügbarkeitsanzeiger eines Servers zur Decodierung der ECMs enthalten.

8. Sendeeinheit nach Anspruch 1, wobei:
- die Einheit außerdem eine Datenbank (40) von jedem der Teilnehmer eigenen Zugriffsrechten enthält, die eine IP-Teilnehmerkennung und eine Einheit von Kriterien enthält, die die Zugriffsrechte definieren, und
- der Server zur Decodierung der ECMs Einrichtungen enthält, um:
• die IP-Adresse des Endgeräts beim Aufbau der Verbindung zu kontrollieren,
• zu untersuchen, ob die Kriterien verifiziert sind oder nicht, und
• die Decodierung der ECMs von der Verifizierung der Kriterien abhängig zu machen.

9. Sendeeinheit nach Anspruch 1, wobei:
- die Einrichtungen des Betreibernetzes, um den Videostrom zu verwürfeln, Einrichtungen mit doppelter Verwürfelung sind;
- das Endgerät Einrichtungen enthält, um einen Entriegelungscode zu bilden und diesen Code an den Server zur Decodierung der ECMs zu schicken; und
- der Server zur Decodierung der ECMs Einrichtungen enthält, um die Ausgabe am Ausgang der CWs vom vorhergehenden Empfang eines vom Endgerät geschickten entsprechenden Entriegelungscodes abhängig zu machen.

10. Sendeeinheit nach Anspruch 1, wobei:
- die Einrichtungen des Betreibernetzes zur Verwürfelung des Videostroms Einrichtungen mit doppelter Verwürfelung sind;
- der Server zur Decodierung der ECMs Einrichtungen enthält, um am Ausgang an das Endgerät zusätzlich zu den CWs einen spezifischen Programmkategorieanzeiger auszugeben, der einer doppelten Verwürfelung unterzogen wird; und
- das Endgerät Einrichtungen enthält, um einen Entriegelungscode zu bilden und die Anwendung der Entwürfelungseinrichtungen des Videostroms von der vorhergehenden Bildung eines entsprechenden Entriegelungscodes abhängig zu machen.

11. Sendeeinheit nach Anspruch 1, wobei die Einrichtungen des Endgeräts zum Aufbau einer Verbindung mit dem Server zur Decodierung der ECMs die aufgebaute Verbindung selbst im Fall einer ausgehend vom Endgerät gesteuerten Kanaländerung halten können.

12. Sendeeinheit nach Anspruch 1, wobei das Betreibernetz außerdem Einrichtungen enthält, um zusätzlich zu den Berechtigungskontrollmitteilungen ECMs für die Entwürfelung des Videostroms Berechtigungsverwaltungsmitteilungen EMMs für die Verwaltung der dem Teilnehmer eigenen Zugriffsrechte zu generieren.

## Claims

1. An assembly for broadcasting a digital video stream via a network, wherein the network comprises:
- an operator network part comprising:
· means for generating successions of control words CWs forming scrambling/unscrambling keys;
· means for producing a video stream;
· means (26) for scrambling the video stream by a first algorithm based on the successively generated CWs, and thus producing a scrambled video flux;
· means (28) for scrambling the CWs by a second algorithm, and thus producing entitlement control messages ECMs derived from these CWs;
· means for producing a transport stream containing packets with the scrambled video stream and packets with the ECMs;
· a link for transmission of the transport stream to the subscriber network; and
· a gateway (14) forming a termination point of the operator network, receiving the transport stream,
- a subscriber private network part comprising:
· a terminal (18) comprising an interface (30), adapted to receive as an input the transport stream containing the packets with the scrambled video stream, and means for unscrambling this video stream by means of associated CXs; and
· a link between the terminal and an output of the gateway,
**characterized in that** the network is an IP-type network, and:
- the interface (30) of the terminal is an IP interface, and the link (24) between the terminal (18s) and the output of the gateway (14) is an IP link;
- the terminal (18) of the subscriber private network is univocally identifiable by the operator network, through its IP address;
- the subscriber private network have no smart-card conditional access management (CAM) module;
- the assembly further comprises an ECM decoding server (34), including an IP interface and means (36) for receiving and decoding ECMs so as to output corresponding CWs;
- this ECM decoding server is a part of the operator network;
- the terminal further comprises:
· means (42) for establishing a connection with the ECM decoding server via: i) the IP interface (30) of the subscriber network and ii) the gateway (14) of the operator network;
· means for sending to the decoding server the ECMs of the transport stream received as an input of the terminal; and
· means for receiving back the corresponding CWs delivered by the ECM decoding server; and
- it is further provided cryptographic means for securing the data exchange protocol between the terminal and the ECM decoding server.

2. The broadcasting assembly of claim 1, further comprising means for authenticating the terminal at the establishment of the connection with the ECM decoding server.

3. The broadcasting assembly of claim 1, further comprising means for authenticating the ECM decoding server at the establishment of the connection with the terminal.

4. The broadcasting assembly of claim 1, wherein the means of the terminal for sending the ECMs to the ECM decoding server and receiving back the corresponding CWs are means adapted to operate via said IP link between the terminal and the operator network interface.

5. The broadcasting assembly of claim 1, wherein the ECM decoding server is installed in a room controlled by the operator.

6. The broadcasting assembly of claim 1, wherein the ECM decoding server is installed in the gateway.

7. The broadcasting assembly of claim 1, wherein the operator network further comprises means for generating packets containing a specific indicator of availability of an ECM decoding server.

8. The broadcasting assembly of claim 1, wherein:
- the assembly further comprises a data base (40) of access rights specific to each subscriber, comprising an IP identifier of the subscriber and a set of criteria defining the access rights, and
- the ECM decoding server comprises means for:
· controlling the IP address of the terminal at the establishment of the connection,
· examining whether said criteria are verified, and
· conditioning the decoding of the ECMs to the verification of said criteria.

9. The broadcasting assembly of claim 1, wherein:
- the means of the operator network for scrambling the video stream are double-scrambling means;
- the terminal comprises means for composing an unlocking code and sending this code to the ECM decoding server; and
- the ECM decoding server comprises means for conditioning the output of the CWs to the previous receiving of a compliant unlocking code sent by the terminal.

10. The broadcasting assembly of claim 1, wherein:
- the means of the operator network for scrambling the video stream are double-scrambling means;
- the ECM decoding server comprises means for outputting to the terminal, in addition to the CWs, a specific indicator of program category subjected to a double-scrambling; and
- the terminal comprises means for composing an unlocking code and conditioning the implementation of the video stream unscrambling means to the previous composition of a compliant unlocking code.

11. The broadcasting assembly of claim 1, wherein the means of the terminal for establishing a connection with the ECM decoding server are adapted to maintain the established connection even in case of change of chain commanded from the terminal.

12. The broadcasting assembly of claim 1, wherein the operator network further comprises means for generating, in addition to the entitlement control messages ECMs for unscrambling the video stream, entitlement management messages EMMs for managing the access rights specific to the subscriber.
